Europäisches Patentamt

European Patent Office

Office européen des brevets

(11) Numéro de publication : **0 462 869 A1**

## (12) DEMANDE DE BREVET EUROPEEN

(21) Numéro de dépôt : **91401524.3**

(22) Date de dépôt : **10.06.91**

(51) Int. Cl.⁵ : **F16D 3/20, F16D 3/22, F16C 3/02**

(30) Priorité : **21.06.90 FR 9007787**

(43) Date de publication de la demande :
**27.12.91 Bulletin 91/52**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Van Dest, Jean Claude**
**27, Chemin de Renard**
**F-91100 Saintry sur Seine (FR)**

(74) Mandataire : **Kohn, Philippe et al**
**c/o CABINET LAVOIX 2, place d'Estienne d'Orves**
**F-75441 Paris Cédex 09 (FR)**

(54) **Corps de joint de transmission et son procédé de réalisation.**

㊸ L'invention propose un corps (10) de joint de transmission comportant plusieurs chemins de portée d'éléments d'articulation, répartis autour de L'axe (X-X) du corps et comportant chacun deux pistes agencées pour coopérer avec des éléments d'articulation du joint de transmission, chaque piste étant constituée par une première surface (16) d'une pièce (14) dont une seconde surface (18) est associée à une surface complémentaire (20) du corps de joint (10) formée dans une portion (12) du corps de joint réalisée en un matériau composite constitué d'une matrice thermodurcissable ou thermoplastique renforcée, caractérisé en ce que la seconde surface (18) de la pièce (14) est susceptible de se déplacer par rapport à ladite surface complémentaire (20) du corps de joint.

FIG.3

EP 0 462 869 A1

La présente invention concerne un corps de joint de transmission comportant plusieurs chemins de portée d'éléments d'articulation, répartis autour de l'axe du corps et comportant chacun deux pistes agencées pour coopérer avec des éléments d'articulation du joint de transmission, chaque piste étant constituée par une première surface d'une pièce dont une seconde surface est associée à une surface complémentaire du corps de joint formée dans une portion du corps réalisée en un matériau composite constitué d'une matrice thermodurcissable ou thermoplastique renforcée.

Un tel corps de joint à structure composite est décrit et représenté dans la demande de brevet français n° 88 04045 publiée sous le n° 2.629.157.

Dans les divers modes de réalisation décrits et représentés dans ce document, les pistes sont réalisées sous forme d'inserts partiellement noyés dans le matériau composite de remplissage de l'enveloppe du corps de joint de transmission.

La présente invention a pour but de proposer un corps de joint de transmission du type mentionné plus haut pourvu de degrés de liberté supplémentaires nécessaires à sa cinématique.

Dans ce but l'invention propose un corps de joint de transmission caractérisé en ce que la seconde surface de la pièce est susceptible de se déplacer par rapport à la surface complémentaire du corps de joint.

Selon d'autres caractéristiques de l'invention:

- la seconde surface et la surface complémentaire sont des surfaces courbes respectivement convexe et concave ;
- les surfaces courbes sont des portions de surfaces cylindriques ;
- l'axe de la portion de surface cylindrique complémentaire concave est parallèle à l'axe général du corps de joint ;
- les rayons de courbure des portions de surfaces cylindriques sont égaux ;
- les génératrices de la première surface de la pièce sont parallèles à l'axe de ladite seconde surface cylindrique ;
- la pièce est immobilisée axialement par rapport au corps du joint ;
- la pièce comporte deux faces transversales de guidage perpendiculaires à l'axe de la seconde surface cylindrique qui sont reçues en coulissement entre deux portions de surfaces transversales parallèles de butée formées dans la portion en matériau composite du corps du joint.

L'invention propose également un procédé de réalisation d'un corps de joint conforme aux enseignements de l'invention, caractérisé en ce qu'il consiste à :

a) utiliser un moule d'injection comportant au moins un noyau central ;

b) mettre en position sur le noyau les pièces par l'intermédiaire de leurs dites premières surfaces, les autres portions de surface des pièces métalliques ayant été préalablement revêtues d'un agent anti-adhésif ; et

c) mouler ladite portion du corps de joint en matériau composite autour desdites pièces et du noyau central.

D'autres caractéristiques et avantages de l'invention apparaîtront à la lecture de la description détaillée qui va suivre pour la compréhension de laquelle on se reportera aux dessins annexés dans lesquels :

- La figure 1 est un quart de vue en section axiale selon la ligne 1-1 de la figure 2 d'une partie d'un corps de joint selon l'invention représenté à l'issue de l'opération de moulage de la portion du corps de joint en matériau composite et avant l'extraction du noyau central ;
- la figure 2 est une vue partielle en section selon la ligne 2-2 de la figure 1 ; et
- les figures 3 et 4 sont des vues similaires à celles des figures 1 et 2 après extraction du noyau central.

On reconnaît aux figures une partie d'un corps de joint de transmission 10 appartenant à la famille des corps de joint de transmission en matériau composite dont une première série de modes de réalisation a été décrite et représentée dans la demande de brevet français FR-A-2.629.157 au contenu de laquelle on pourra se reporter pour connaître les autres caractéristiques de structure du corps de joint.

La partie centrale du corps de joint 10 est constituée par une portion 12 en matériau composite constitué d'une matrice thermodurcissable ou thermoplastique renforcée de fibres courtes ou de particules.

Le corps de joint 10 comporte des chemins de roulement ou de portée d'éléments d'articulation répartis régulièrement autour de l'axe X-X du corps de joint et comportant chacun deux pistes agencées parallèlement entre elles pour coopérer avec des éléments d'articulation du joint de transmission.

Conformément à l'invention chaque piste est une pièce, par exemple, métallique 14 qui est associée à la portion 12 en matériau composite de manière à pouvoir se déplacer par rapport au corps du joint.

Dans le mode de réalisation représenté aux figures, la pièce 14 est délimitée longitudinalement par une première surface plane 16 qui constitue la piste de roulement proprement dite et par une portion de surface cylindrique convexe 18 qui est prévue pour coopérer avec une portion de surface cylindrique concave complémentaire 20 du corps de joint.

L'axe de la portion de surface cylindrique 18 est parallèle à la surface plane 16.

L'axe Y-Y de la portion de surface cylindrique concave 20 est parallèle à l'axe X-X du corps de joint 12.

Dans le mode de réalisation représenté aux figures, les rayons de courbure des portions de surfaces 18 et 20 sont égaux.

La pièce 14 est délimitée transversalement par deux faces de guidage transversales opposées 22 et 24 qui sont prévues pour être reçues en coulissement entre deux portions de surfaces transversales parallèles de butée 26 et 28 de la portion 12 du corps de joint 10.

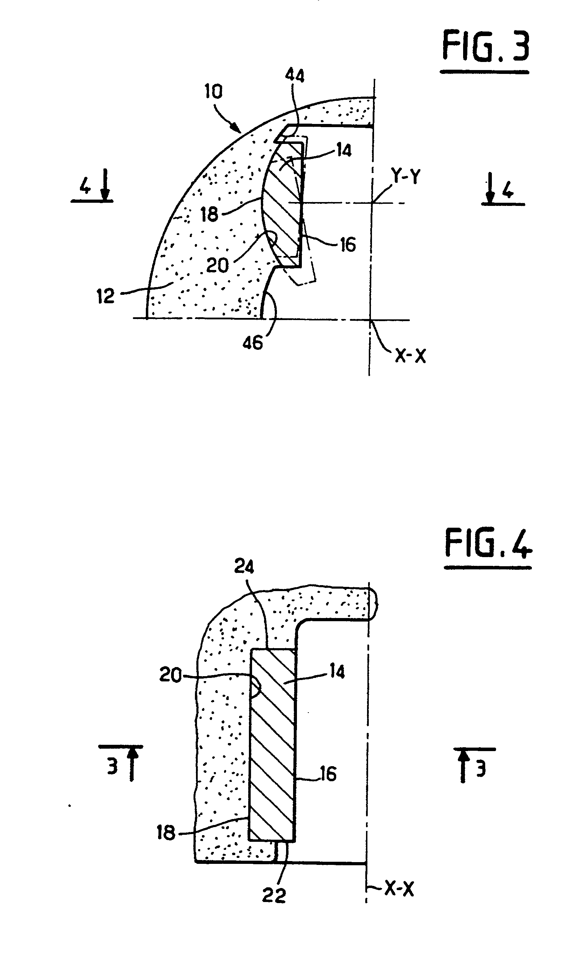

Grâce à cet agencement, la pièce 14 peut se déplacer par rapport au corps de joint 10 en pivotement autour de l'axe Y-Y de part et d'autre de sa position médiane représentée aux figures 3 et 4 vers des positions décalées angulairement qui sont illustrées en traits mixtes à la figure 3.

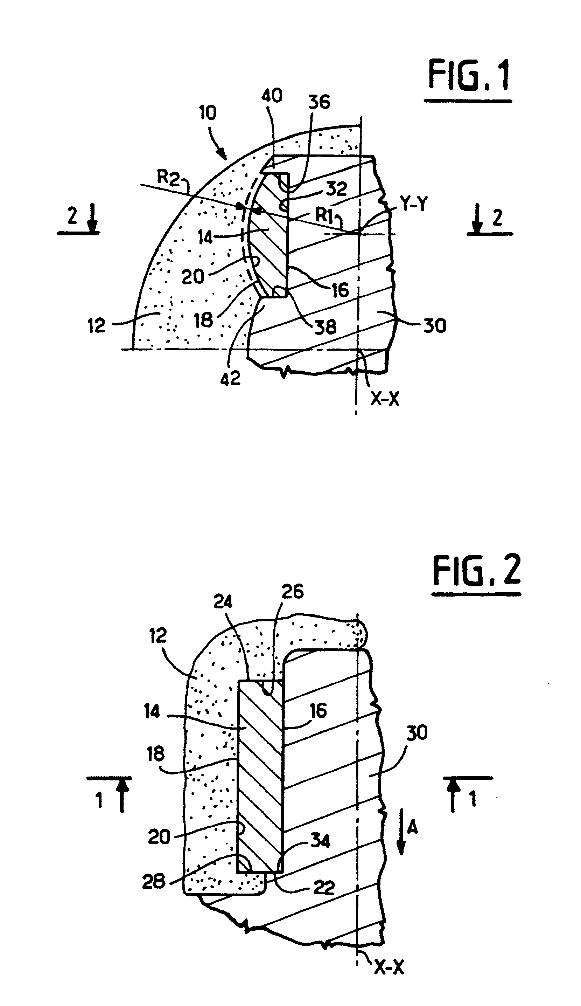

On a représenté aux figures 1 et 2 une portion 30 d'un noyau central d'un moule (non représenté) permettant de réaliser de manière particulièrement avantageuse un corps de joint 10 conforme aux enseignements de l'invention.

Le noyau central 30 est du même type que celui décrit et représenté dans la demande de brevet mentionnée précédemment et il comporte des séries de logements 32 dans lesquels sont reçues les pièces 14 qui prennent appui dans le fond de ces logements par l'intermédiaire de leurs surfaces planes 16. Elles sont positionnées axialement par rapport au noyau 30 par l'intermédiaire de leurs surfaces transversales de guidage 22 qui prennent appui contre les faces correspondantes en vis-à-vis 34 des logements 32. De même elle est positionnée angulairement par les deux faces longitudinales 36 et 38 du logement 32 du noyau 30.

Les portions radiales 40 et 42 du noyau 30 qui delimitent les surfaces longitudinales 36 et 38 du logement 32 s'étendent radialement au-delà du rayon R1 de la surface cylindrique convexe 18 de la pièce 14 jusqu'à un rayon R2 supérieur au rayon R1.

La différence entre les rayons R2 et R1 permet de réaliser directement par moulage les dégagements 44 et 46 de la portion 12 du corps de joint 10 qui permettent ultérieurement le pivotement des pièces 14 (voir figure 3).

Le matériau composite de remplissage constitutif de la portion 12 est injecté dans le moule (non représenté) autour du noyau central 30 qui a été préalablement muni des pièces métalliques 14.

Le moulage direct du matériau composite sur les surfaces cylindriques concaves 18 permet d'obtenir directement les surfaces cylindriques concaves complémentaires 20 à l'issue de l'opération de moulage.

Afin d'éviter l'adhérence des pièces 14 à la portion en matériau composite 12 à l'issue de la polymérisation, il est prévu de revêtir toutes les portions de surfaces extérieures des pièces 14 susceptibles d'être en contact avec le matériau composite ainsi que le noyau d'un revêtement anti-adhésif. Le démoulage s'effectue par extraction du noyau 30 selon la direction de la flèche A de la figure 2, les pièces 14 restant en position contre les surfaces complémentaires cylindriques concaves 20 et pouvant ultérieurement se déplacer par rapport à ces dernières grâce à la présence du revêtement anti-adhésif.

Le revêtement anti-adhésif utilisé peut être un vernis, une cire, un produit à base de silicone ou tout autre agent de démoulage couramment utilisé.

Le revêtement anti-adhésif peut ne servir que lors des opérations de moulage et être ensuite éliminé des pièces 14 ou constituer un revêtement définitif des pièces 14 tel que par exemple un revêtement en PTFE.

Le procédé selon l'invention qui permet de réaliser directement des surfaces complémentaires est particulièrement avantageux car on obtient ainsi une conformité parfaite des surfaces.

Les états des surfaces 18 et 20 sont également de même qualité.

Chaque corps de joint de transmission réalisé selon ce procédé est directement associé aux pièces 14 qui ont permis sa réalisation et qui lui sont appariées.

De même le procédé selon l'invention permet de réaliser directement les surfaces de butées transversales de retenue axiale des pièces 14 dans le corps de joint 10.

L'invention n'est pas limitée au mode de réalisation qui vient d'être décrit et elle trouve à s'appliquer à différents types de joints de transmission et à différentes conformations géométriques des surfaces 16 et 18 des pièces 14.

**Revendications**

1.  Corps (10) de joint de transmission comportant plusieurs chemins de portée d'éléments d'articulation, répartis autour de l'axe (X-X) du corps et comportant chacun deux pistes agencées pour coopérer avec des éléments d'articulation du joint de transmission, chaque piste étant constituée par une première surface (16) d'une pièce (14) dont une seconde surface (18) est associée à une surface complémentaire (20) du corps de joint (10) formée dans une portion (12) du corps de joint réalisée en un matériau composite constitué d'une matrice thermodurcissable ou thermoplastique renforcée, caractérisé en ce que ladite seconde surface (18) de la pièce (14) est susceptible de se déplacer par rapport à ladite surface complémentaire (20) du corps de joint.

2.  Corps de joint selon la revendication 1, caractérisé en ce que la seconde surface (18) et la surface complémentaire (20) sont des surfaces courbes respectivement convexe et concave.

3. Corps de joint de transmission selon la revendication 2, caractérisé en ce que lesdites surfaces courbes sont des portions de surfaces cylindriques.

4. Corps de joint de transmission selon la revendication 3, caractérisé en ce que l'axe de ladite portion de surface cylindrique complémentaire concave (20) est parallèle à l'axe (X-X) du corps de joint (10).

5. Corps de joint de transmission selon l'une des revendications 3 ou 4, caractérisé en ce que les rayons de courbure desdites portions de surfaces cylindriques (18, 20) sont égaux.

6. Corps de joint de transmission selon l'une quelconque des revendications 3 à 5, caractérisé en ce que les génératrices de ladite première surface (16) de la pièce (14) sont parallèles à l'axe de ladite seconde surface cylindrique (18).

7. Corps de joint de transmission selon l'une quelconque des revendications 3 à 6, caractérisé en ce que la pièce (14) est immobilisée axialement par rapport au corps de joint (10).

8. Corps de joint de transmission selon la revendication 7, caractérisé en ce que la pièce (14) comporte deux faces de guidage transversales (22, 24) perpendiculaires à l'axe de la seconde surface cylindrique (18) qui sont reçues en coulissement entre deux portions de surfaces transversales parallèles de butée (26, 28) formées dans la portion en matériau composite (12) du corps de joint (10).

9. Procédé de réalisation d'un corps de joint selon l'une quelconque des revendications précédentes, caractérisé en ce qu'il consiste à :
   a) utiliser un moule d'injection comportant au moins un noyau central (30) ;
   b) mettre en position sur le noyau central (30) les pièces (14) par l'intermédiaire de leurs dites premières surfaces (16), les autres portions de surface des pièces métalliques (14) ayant été préalablement revêtues d'un agent anti-adhésif ; et
   c) mouler ladite portion en matériau composite (12) du corps de joint (10) autour desdites pièces (14) et du noyau central (30).

## FIG.1

10
40
36
R2
32
Y-Y
R1
2
14
2
20
16
12
18
38
30
42
X-X

## FIG.2

24
26
12
14
16
18
30
1
1
A
20
34
28
22
X-X

FIG.3

10    44    14    Y-Y    4    18    16    20    12    46    X-X

FIG.4

24    20    14    16    18    22    3    X-X

EP 0 462 869 A1

**Office européen des brevets**

# RAPPORT DE RECHERCHE EUROPEENNE

Numero de la demande

EP    91 40 1524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 722 115 (DUNN) <br> * le document en entier * <br> --- | 1-8 | F16D3/20 <br> F16D3/22 <br> F16C3/02 |
| D,Y <br> A | FR-A-2 629 157 (GLAENZER SPICER) <br> * page 5 - page 6; figures 1-3 * <br> --- | 1-8 <br> 9 | |
| Y | FR-A-1 228 149 (GLAENZER SPICER) <br> * le document en entier * <br> --- | 1-7 | |
| Y | FR-A-2 567 222 (NIPPON) <br> * le document en entier * <br> --- | 1-7 | |
| A | EP-A-34 073 (CITROEN) <br> * le document en entier * <br> --- | 1 | |
| A | FR-A-2 586 767 (NIPPON) <br> * le document en entier * <br> ----- | 1 | |

|  |
|---|
| **DOMAINES TECHNIQUES RECHERCHES (Int. Cl.5)** |
| F16D <br> F16C |

Le présent rapport a été établi pour toutes les revendications

| Lieu de la recherche | Date d'achèvement de la recherche | Examinateur |
|---|---|---|
| LA HAYE | 11 SEPTEMBRE 1991 | BALDWIN D. R. |